# EUROPEAN PATENT APPLICATION

(11) **EP 4 613 546 A1**
(43) Date of publication of application: **10.09.2025**
(21) Application number: 24162191.1
(22) Date of filing: 07.03.2024
(51) Int. Cl.: B60L 58/16

(54) **METHOD FOR CONTROLLING A TRACTION BATTERY OF A VEHICLE, USES OF FIRST DATA INDICATIVE OF A REMAINING USABILITY OF A TRACTION BATTERY AND/OR SECOND DATA INDICATIVE OF A TARGET REMAINING USABILITY OF A TRACTION BATTERY, AND DATA PROCESSING APPARATUS**

(71) Applicant: Volvo Car Corporation, 405 31 Göteborg (SE)
(72) Inventor: CÉSAR, Rui, 40531 Göteborg (SE); RUNFELT, Erik, 40531 Göteborg (SE)
(74) Representative: Maiwald GmbH

(57) **Abstract**

The disclosure relates to a method for controlling a traction battery of a vehicle. One step of the method comprises obtaining first data (Dla, Dlb) indicative of a remaining usability (51) of the traction battery. Another step of the method comprises obtaining second data (D2) indicative of a target remaining usability (49) of the traction battery. A further step of the method comprises providing third data indicative of a target temperature for the traction battery based on a difference between the first data (D1a, D1b) and the second data (D2). The disclosure also relates to a use of first data (Dla, Dlb) indicative of a remaining usability (51) of a traction battery and/or second data (D2) indicative of a target remaining usability (49) of a traction battery for providing third data indicative of a target temperature for the traction battery and for providing fourth data indicative of a time limit in which a target temperature for the traction battery is to be reached. Moreover, the disclosure relates to a data processing apparatus comprising means for carrying out the method of the disclosure.

## Description

### TECHNICAL FIELD

The present disclosure relates to a method for controlling a traction battery of a vehicle.

Moreover, the present disclosure relates to uses of first data indicative of a remaining usability of a traction battery and/or of second data indicative of a target remaining usability of a traction battery.

Furthermore, the present disclosure relates to a data processing apparatus.

### BACKGROUND ART

The temperature of a traction battery of a vehicle during use is known to affect a lifetime and performance of the traction battery. In this context, the traction battery of the vehicle is to be understood as an electric storage unit configured to store and provide electric energy used for driving the vehicle. Sometimes, such an electric storage unit is also called a high voltage battery since it usually operates at higher voltages than other batteries potentially used in the vehicle.

In order to reach a comparatively long lifetime of the traction battery, thermal management systems for controlling the temperature of the traction battery are common practice in today's vehicles.

These thermal management systems are powered using electric energy stored in the traction battery. In contrast to a long lifetime of the traction battery, using electric energy stored in the traction battery for powering the thermal management system is undesired since it potentially reduces a driving range. Thus, ensuring a long battery life and enhancing driving range are at least partially conflicting objectives.

### SE:TOP

### SUMMARY

It is an objective of the present disclosure to alleviate the above-mentioned conflict of objectives.

The problem is at least partially solved or alleviated by the subject matter of the independent claims of the present disclosure, wherein further examples are incorporated in the dependent claims.

According to a first aspect, there is provided a method for controlling a traction battery of a vehicle. The method comprises:
- obtaining first data indicative of a remaining usability of the traction battery,
- obtaining second data indicative of a target remaining usability of the traction battery, and
- providing third data indicative of a target temperature for the traction battery based on a difference between the first data and the second data.

In this context, obtaining is to be understood as receiving or determining. The remaining usability of the traction battery may relate to a degree or portion of usability of the traction battery. The target remaining usability of the traction battery may be resulting from a guarantee that a vehicle manufacturer or battery manufacturer gives to its customers. The target remaining usability may be expressed as a degree or portion of usability of the traction battery at an end of a time period or at an end of a total mileage of the vehicle. Additionally or alternatively, the target remaining usability of the traction battery may be based on a legal requirement defining a degree of usability of the traction battery at an end of a time period or at an end of a total mileage of the vehicle.

A target temperature for the traction battery is a reference temperature for the traction battery which a thermal management system associated with the traction battery tries to reach in order to positively affect chemical conversion processes inside the traction battery. The target temperature or reference temperature may be used in a closed-loop temperature control executed by the thermal management system. Chemical conversion processes particularly occur in the traction battery during charging or when current is drained from the traction battery in order to drive the vehicle. As has been mentioned before, the temperature of the traction battery strongly influences ageing processes within the traction battery. By considering a difference between the first data and the second data, the target temperature can be set in an effective and efficient manner. This means that the target temperature may be set such that it produces a desired reduction of ageing processes, but no reduction beyond the desired effect. The method has the further effect that energy for a thermal control of the traction battery can be saved and/or used with high efficiency. This is due to the fact that depending on a difference between the first data and the second data, a comparatively high target temperature may be acceptable. Setting the target temperature to a comparatively high value usually requires less energy than setting the target temperature to a comparatively low value, if the vehicle is in a comparatively warm environment. Alternatively, a comparatively low target temperature may be acceptable, if the vehicle is in a comparatively cold environment. Since energy for a thermal control of the traction battery may be taken from the traction battery itself, a usable amount of energy for driving may be increased. Consequently, a driving range of the vehicle may be increased.

In other words, the third data provided by the method according to the present disclosure may be used for causing a temperature of the traction battery to evolve towards the target temperature or to stay at the target temperature. As has been mentioned before, this may be done in a closed-loop control which may for example be executed on a thermal management system for the traction battery.

In an example, the first data is based on a usage history of the traction battery. In this context, a usage history of the traction battery describes a use of the traction battery in the past. Usage history may for example refer to usage during a previous period of time or during a previously driven mileage. In other words, the first data indicative of a remaining usability of the traction battery is a function of how the traction battery has been used in the past. To this end, the first data indicative of the remaining usability of the traction battery may be derived from a model that takes the usage history of the traction battery as an input. The usage history of the traction battery may be indicative of circumstances under which the vehicle has been used in the past. Since the use of the traction battery strongly affects the remaining usability of the traction battery, this allows to have a precise indication of the remaining usability. Thus, the target temperature for the traction battery can be set according to the circumstances under which the traction battery has been used in the past.

In an example, the usage history of the traction battery is described by at least one of:
- an average temperature of an ambient of the traction battery over a time period,
- an average temperature of the traction battery during parking,
- an average temperature of the traction battery during charging,
- an average temperature of the traction battery during driving of the vehicle,
- an amount of time the temperature of the traction battery was above a predefined temperature threshold,
- a number of times the temperature of the traction battery was above a predefined temperature threshold,
- an amount of time a state of charge of the traction battery was above a predefined charging threshold,
- a number of times a state of charge of the traction battery was above a predefined charging threshold,
- an amount of time a current delivered into or drained from the traction battery was above a predefined current threshold, and
- a number of times a current delivered into or drained from the traction battery was above a predefined current threshold.
A common point of the above parameters is that they all affect the ageing process of the traction battery. Hence, by quantifying the above parameters, an ageing state of the traction battery can be determined, e.g. by a model considering one or more of the above parameters as an input. In other words, a remaining usability of the traction battery can be derived from one or more of the above parameters. One or more of the above-mentioned parameters may as well be considered as a model describing the usage history of the traction battery. Consequently, the usage history may be determined using such a model.

In an example, the remaining usability is associated with a remaining usable electric capacity of the traction battery. Additionally or alternatively, the target remaining usability is associated with a target remaining usable electric capacity of the traction battery. The remaining usable electric capacity of the traction battery is the amount of electric energy that the traction battery may provide in a cycle between a fully charged state and a fully discharged state. The fully charged state of the traction battery may be understood as an end of charging at which the battery is not capable of storing any additional electric energy. The fully discharged state of the traction battery may be characterized as the point when the battery is not capable of providing enough electric power to an electric machine, which drives the vehicle, any more. The target remaining electric capacity may be understood as the desired remaining electric capacity in order to meet the requirements of a guarantee that the vehicle manufacturer has given to its customers or the desired remaining electric capacity in order to meet legal requirements. Hence, the remaining usability being associated with a remaining usable electric capacity of the traction battery has the effect that a certain driving range of the vehicle can be met.

In an example, the target usable electric capacity of the traction battery exceeds 70 % of a gross electric capacity of the traction battery, preferably 75 % and even more preferably 80 % of a gross electric capacity of the traction battery. This has the effect that an initial driving range of the vehicle is substantially maintained over time or over the mileage of the vehicle. In this context, an initial driving range of the vehicle is to be understood as a distance the vehicle can cover when using a maximum amount of usable energy that can be stored in the traction battery of the vehicle when the traction battery is new. Thus, providing third data indicative of a target temperature helps ensuring a comparatively high usable electric capacity of the traction battery.

In an example, the target temperature for the traction battery is 25°C to 65°C. This has the effect that the temperature of the traction battery is prevented from reaching excessively high temperatures, i.e. temperatures higher than 65 °C, during use of the traction battery. Additionally, the temperature of the traction battery is prevented from dropping to low temperatures, i.e. temperatures lower than 25 °C, during use of the traction battery. High temperatures and low temperatures negatively affect chemical conversion processes inside the traction battery and, thus, lead to accelerated ageing of the traction battery. Chemical conversion processes particularly occur in the traction battery during use of the traction battery. A use of the traction battery is particularly understood as charging the traction battery or draining current from the traction battery in order to drive the vehicle. Hence, the method has the effect that an ageing process of the traction battery can be positively affected in the sense that the ageing process is slowed down.

In an example, an allowable rate of change of the target temperature for the traction battery is based on the usage history of the traction battery. An allowable rate of change of the target temperature for the traction battery is to be understood as the extent to which the target temperature for the traction battery is allowed to change per time unit. The target temperature for the traction battery may change as the difference between the first data indicative of a remaining usability of the traction battery and the second data indicative of a target remaining usability of the traction battery changes. In an example, the first data may be derived from a model that takes the usage history of the traction battery as an input. Hence, the difference between the first data and the second data may depend on the usage history of the traction battery. The greater the difference between the first data and the second data, the higher the allowable rate of change of the target temperature for the traction battery may be. This has the effect that the traction battery may quickly return to its target remaining usability or onto a path leading to its target remaining usability. In other words, the difference between the first data and the second data may quickly be reduced. In this context, quickly may be understood with respect to time. Additionally or alternatively, quickly may be understood in the sense of a covered distance of the vehicle.

In an example, the allowable rate of change of the target temperature for the traction battery is lower or equal to 5 °C per month, preferably lower or equal to 3 °C per month and even more preferably lower or equal to 1 °C per month. Defining an allowable rate of change of the target temperature for the traction battery prevents excessive changes to the target temperature for the traction battery. This has the effect that situations in which the vehicle is temporarily used under different circumstances, the target temperature for the traction battery is not greatly affected. When the vehicle is used under normal circumstances again, which correspond to a great portion of the usage history, the target temperature for the traction battery already matches a usage profile that the traction battery is likely to experience. Different circumstances of a use of the vehicle may occur when a vehicle owner uses the vehicle to drive to another country on holiday, where the climate may be different. Different circumstances of a use of the vehicle may also occur when a different driver takes over the vehicle.

In an example, the method further comprises providing fourth data indicative of a time limit in which the target temperature for the traction battery is to be reached based on the difference between the first data and the second data. The time limit in which the target temperature for the traction battery is to be reached is to be understood as a parameter of a control loop for the thermal control of the traction battery. The shorter the time limit in which the target temperature for the traction battery is to be reached, the more pronounced cooling or heating of the traction battery is necessary. This means that a cooling or heating rate of the traction battery is increased. This has the first effect that the target temperature for the traction battery is reached, with respect to time, more quickly. A second effect of a shorter time limit in which the target temperature for the traction battery is to be reached is an increased energy consumption of the thermal control of the traction battery executed by the thermal management system. Since the energy for the thermal control may be drawn from the traction battery itself, a usable amount of energy for driving may be decreased. Consequently, a driving range of the vehicle may be decreased. The longer the time limit in which the target temperature for the traction battery is to be reached, the less pronounced cooling or heating of the traction battery is necessary. This means that a cooling or heating rate of the traction battery is decreased. This has the effect that the target temperature for the traction battery is reached, with respect to time, more slowly by the traction battery. Another effect of a longer time limit in which the target temperature for the traction battery is to be reached is a decreased energy consumption of the thermal control of the traction battery. Since the energy for the thermal control may be drawn from the traction battery itself, a usable amount of energy for driving may be increased. Consequently, a driving range of the vehicle may be increased. Providing the fourth data based on a difference between the first data and the second date ensures a suitable balance between the above-mentioned effects. Thus, a good tradeoff between energy efficiency and performance of cooling or heating may be reached.

In an example, the time limit is 1 hour or less, preferably 45 minutes or less, even more preferably 30 minutes or less. This has the effect that the target temperature for the traction battery is, with respect to time, quickly reached by the traction battery. The time limit may depend on the usage history of the traction battery. The time limit may be comparatively short, e.g. 30 minutes or less, when there is a major difference between the first data indicative of a remaining usability of the traction battery and the second data indicative of a target remaining usability of the traction battery. The time limit may be comparatively long, e.g. 1 hour, when there is a minor difference between the first data indicative of a remaining usability of the traction battery and the second data indicative of a target remaining usability of the traction battery. This has the effect that energy used for cooling or heating the traction battery can be saved while at the same time ensuring that the traction battery meets its remaining usability target.

The method may be at least partly computer-implemented, and may be implemented in software or in hardware, or in software and hardware. Further, the method may be carried out by executing computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a use of first data indicative of a remaining usability of a traction battery and/or second data indicative of a target remaining usability of a traction battery for providing third data indicative of a target temperature for the traction battery. This implies that the target temperature for the traction battery is based on the remaining usability of the traction battery and/or on the target remaining usability of a traction battery. The remaining usability of the traction battery may relate to a degree or portion of usability of the traction battery. The target remaining usability of the traction battery may result from a guarantee that a vehicle manufacturer or battery manufacturer gives to its customers on a degree of usability of the traction battery over a time period or a mileage of the vehicle. The target remaining usability may be expressed as a degree or portion of usability of the traction battery at an end of a time period or at an end of a total mileage of the vehicle. the target remaining usability of the traction battery may be based on a legal requirement defining a degree of usability of the traction battery at an end of a time period or at an end of a total mileage of the vehicle. A target temperature for the traction battery is a reference temperature for the traction battery which a thermal management system associated with the traction battery tries to reach in order to positively affect chemical conversion processes inside the traction battery. The target temperature or reference temperature may be used on a closed-loop temperature control executed by the thermal management system. The use has the effect that an ageing process of the traction battery can be positively affected in the sense of the ageing process being slowed down. The use has the further effect that energy for a thermal control of the traction battery can be saved and/or used with high efficiency. This is due to the fact that depending on a difference between the first data and the second data, a comparatively high target temperature may be acceptable. Setting the target temperature to a comparatively high value usually requires less energy than setting the target temperature to a comparatively low value, if the vehicle is in a comparatively warm environment. Alternatively, a comparatively low target temperature may be acceptable, if the vehicle is in a comparatively cold environment. Since energy for a thermal control of the traction battery may be taken from the traction battery itself, a usable amount of energy for driving may be increased. Consequently, a driving range of the vehicle may be increased.

In an example, the first data is based on a usage history of the traction battery. In this context, a usage history of the traction battery describes a use of the traction battery in the past. In other words, the first data indicative of a remaining usability of the traction battery is a function of how the traction battery has been used in the past. To this end, the first data indicative of the remaining usability of the traction battery may be derived from a model that takes the usage history of the traction battery as input. The usage history of the traction battery may be indicative of circumstances under which the vehicle has been used in the past. Since the use of the traction battery strongly affects the remaining usability of the traction battery, this allows to have a precise indication of the remaining usability. Thus, the target temperature for the traction battery can be set according to the circumstances under which the traction battery has been used in the past.

According to a third aspect, there is provided a use of first data indicative of a remaining usability of a traction battery and/or second data indicative of a target remaining usability of a traction battery for providing fourth data indicative of a time limit in which a target temperature for the traction battery is to be reached. This implies that the time limit in which the target temperature for the traction battery is to be reached is based on the remaining usability of the traction battery and/or on the target remaining usability of a traction battery. The remaining usability of the traction battery may relate to a degree or portion of usability of the traction battery. The target remaining usability of the traction battery may result from a guarantee that a vehicle manufacturer or battery manufacturer gives to its customers on a degree or portion of usability of the traction battery over a time period or a mileage of the vehicle. Additionally or alternatively, the target remaining usability of the traction battery may result from a legal requirement defining a degree of usability of the traction battery at an end of a time period or at an end of a total mileage of the vehicle. A target temperature for the traction battery is a reference temperature for the traction battery which a thermal management system associated with the traction battery tries to reach in order to positively affect chemical conversion processes inside the traction battery. The target temperature or reference temperature may be used on a closed-loop temperature control executed by the thermal management system. The time limit in which the target temperature for the traction battery is to be reached is to be understood as a parameter of a control loop for the thermal control of the traction battery. The shorter the time limit in which the target temperature for the traction battery is to be reached, the more pronounced cooling or heating of the traction battery is necessary. This means that a cooling or heating rate of the traction battery is increased. This has the effect that the target temperature for the traction battery is reached, with respect to time, more quickly by the traction battery. Another effect of a shorter time limit in which the target temperature for the traction battery is to be reached is an increased energy consumption of the thermal control of the traction battery. Since the energy for the thermal control may be drawn from the traction battery itself, a usable amount of energy for driving may be decreased. Consequently, a driving range of the vehicle may be decreased. The longer the time limit in which the target temperature for the traction battery is to be reached, the less pronounced cooling or heating of the traction battery is necessary. This means that a cooling or heating rate of the traction battery is decreased. This has the effect that the target temperature for the traction battery is reached, with respect to time, more slowly by the traction battery. A further effect of a longer time limit in which the target temperature for the traction battery is to be reached is a decreased energy consumption of the thermal control of the traction battery. Since the energy for the thermal control may be drawn from the traction battery itself, a usable amount of energy for driving may be increased. Consequently, a driving range of the vehicle may be increased. Providing the fourth data based on the first data and/or the second date ensures a suitable balance between the above-mentioned effects. Thus, a good tradeoff between energy efficiency and performance of cooling or heating may be reached.

In an example, the first data is based on a usage history of the traction battery. In this context, a usage history of the traction battery describes a use of the traction battery in the past. In other words, the first data indicative of a remaining usability of the traction battery is a function of how the traction battery has been used in the past. To this end, the first data indicative of the remaining usability of the traction battery may be derived from a model that takes the usage history of the traction battery as input. The usage history of the traction battery may be indicative of circumstances under which the vehicle has been used in the past. Since the use of the traction battery strongly affects the remaining usability of the traction battery, this allows to have a precise indication of the remaining usability. Thus, the target temperature for the traction battery can be set according to the circumstances under which the traction battery has been used in the past

According to a fourth aspect, there is provided a data processing apparatus comprising means for carrying out the method of the present disclosure. Thus, using such a data processing apparatus, the target temperature for the traction battery may be reliably provided. Moreover, the traction battery may be cooled or heated in an energy saving manner while still ensuring that the target remaining usability of the traction battery is reliably reached. Such a data processing apparatus may also be called a data processing means. Non-limiting examples of a data processing apparatus could for example be what generally is referred to as Vehicle Control Unit, VCU, Engine Control Unit, ECU, Powertrain Control Unit, VCU, an Application Specific Integrated Circuit, ASIC, or other control unit particularly configured to manage functionalities related to the management of a traction battery of a vehicle, or any other corresponding data processing apparatus of a vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising an electric drivetrain and a data processing apparatus according to the present disclosure,
- Figure 2: shows steps of a method according to the present disclosure for controlling a traction battery of a vehicle,
- Figure 3: shows a schematic graph of a remaining usability of a traction battery over time,
- Figure 4: shows a schematic graph of a temperature of a traction battery during use of the traction battery.

### DETAILED DESCRIPTION

The Figures are merely schematic representations and serve only to illustrate examples of the disclosure. Identical or equivalent elements are in principle provided with the same reference signs.

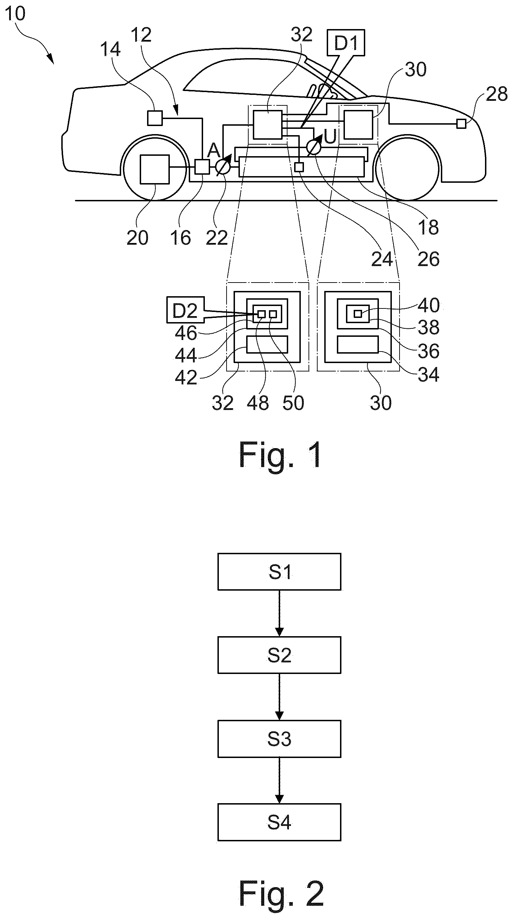

Figure 1 shows a vehicle 10.

The vehicle 10 comprises an electric drivetrain 12.

The electric drivetrain 12 comprises a charging interface 14, a converter unit 16, a traction battery 18, an electric machine 20, and an ampere meter 22.

The traction battery 18 is electrically connected to the converter unit 16 via the ampere meter 22.

The converter unit 16 is electrically connected to both the charging interface 14 and the electric machine 20.

The converter unit 16 converts charging current, which may be AC or DC charging current, received from the charging interface 14 to DC charging current of a suitable voltage in order to charge the traction battery 18.

Moreover, the converter unit 16 converts DC received from the traction battery 18 into AC, which is provided to the electric machine 20 in order to drive the vehicle 10.

The traction battery 18 comprises a battery temperature sensor 24 and a voltmeter 26.

The vehicle 10 further comprises an ambient temperature sensor 28.

Moreover, the vehicle 10 comprises a data processing apparatus 30, which will be designated as first data processing apparatus in the following, and a data processing apparatus 32, which will be designated as second data processing apparatus in the following.

The ampere meter 22, battery temperature sensor 24, the voltmeter 26, the ambient temperature sensor 28 and the first data processing apparatus 30 are communicatively connected to the second data processing apparatus 32.

The first data processing apparatus 30 comprises a first data processing unit 34 and a first data storage unit 36.

The first data storage unit 36 comprises a first computer-readable storage medium 38.

On the first computer-readable storage medium 38, and, thus, on the first data storage unit 36, there is provided a first computer program 40.

The first computer program 40, and, thus, also the first computer-readable storage medium 38, comprise instructions which, when executed by the first data processing unit 34 or, more generally, a first computer, cause the first data processing unit 34 or the first computer to carry out a method for determining and providing a time 41.

The second data processing apparatus 32 comprises a second data processing unit 42 and a second data storage unit 44.

The second data storage unit 44 comprises a second computer-readable storage medium 46.

On the second computer-readable storage medium 46, and, thus, on the second data storage unit 44, there is provided a look-up table 48 for a target remaining usability 49 of the traction battery 18.

On the second computer-readable storage medium 46, and, thus, on the second data storage unit 44, there is also provided a second computer program 50.

The second computer program 50, and, thus, also the second computer-readable storage medium 46, comprise instructions which, when executed by the second data processing unit 42 or, more generally, a second computer, cause the second data processing unit 42 or the second computer to carry out a method for controlling a traction battery 18 of a vehicle 10.

The first data processing apparatus 30 is communicatively connected, or coupled, to the second data processing apparatus 32. As will be discussed more in detail below, the first data processing apparatus 30 is configured to provide the second data processing apparatus with data related to elapsed time 41 and a mileage of the vehicle 10.

The method for controlling a traction battery 18 of a vehicle 10 comprises a first step S1 (see Figure 2) of obtaining first data D1, D1a, D1b indicative of a remaining usability 51 of the traction battery 18. The method may be performed by the second data processing apparatus 32, as will be discussed more in detail below.

In the present example, the remaining usability 51 of the traction battery 18 is associated with a remaining usable electric capacity of the traction battery 18. The remaining usable electric capacity may be expressed as a percentage of an initial usable electric capacity or as a percentage of a gross electric capacity of the traction battery 18.

In a first alternative of performing step S1, the remaining usable electric capacity of the traction battery 18 and thus the remaining usability 51 of the traction battery 18 is determined from a voltage of the traction battery 18 at an end of a charging process.

The voltage of the traction battery 18 at the end of the charging process is determined by means of the voltmeter 26. This means that the voltage is indicative of the remaining usable electric capacity.

In a second alternative of performing step S1, the remaining usability 51 of the traction battery 18 is derived from a model that is based on a usage history of the traction battery 18.

In the present example, the usage history of the traction battery 18 is described by an average temperature of an ambient of the traction battery 18 over a time period 41.

The temperature of an ambient of the traction battery is provided by ambient temperature sensor 28.

The second data processing apparatus 32 determines the average temperature of the ambient of the traction battery 18 over the time period 41 based on data provided by the ambient temperature sensor 28 and based on data provided by the first data processing apparatus 30, i.e. data describing a time.

According to further alternatives, the usage history of the traction battery 18 is described by:
- an average temperature of the traction battery 18 during parking,
- an average temperature of the traction battery 18 during charging,
- an average temperature of the traction battery 18 during driving of the vehicle 10,
- an amount of time the temperature of the traction battery 18 was above a predefined temperature threshold,
- a number of times the temperature of the traction battery 18 was above a predefined temperature threshold,
- an amount of time a state of charge of the traction battery 18 was above a predefined charging threshold,
- a number of times a state of charge of the traction battery 18 was above a predefined charging threshold,
- an amount of time a current delivered into or drained from the traction battery 18 was above a predefined current threshold, or
- a number of times a current delivered into or drained from the traction battery 18 was above a predefined current threshold.

A temperature of the traction battery 18 may be provided by battery temperature sensor 24.

A state of charge of the traction battery is determined from the voltage of the traction battery 18 at the end of charging as indicated by the voltmeter 26.

A current delivered into or drained from the traction battery 18 is determined by the ampere meter 22.

It should be noted that the usage history of the traction battery 18 can also be based on a combination one or more of the above alternatives.

The method for controlling a traction battery 18 of a vehicle 10 further comprises a second step S2 of obtaining second data D2 indicative of a target remaining usability 49 of the traction battery 18.

The target remaining usability 49 is associated with a target remaining usable electric capacity of the traction battery. The target remaining usable electric capacity may be expressed as a percentage of an initial usable electric capacity or as a percentage of a gross electric capacity of the traction battery 18. The target remaining usable electric capacity may be a function of time of use of the vehicle 10 or a function of a total mileage of the vehicle 10.

The target remaining usability 49 of the traction battery 18 is stored on the second data storage unit 44 of the second data processing apparatus 32. More precisely, the target 49 remaining usability of the traction battery 18 is provided by the look-up table 48 in the second data storage unit 44 of the second data processing apparatus 32.

In the present example of step S2, the target 49 remaining usability of the traction battery 18 is provided as a function of time 41.

Additionally or alternatively, the target remaining usability 49 of the traction battery 18 may be provided with respect to a mileage of the vehicle 10.

For this alternative, the first data processing apparatus 30 may also be configured to determine and provide a mileage of the vehicle 10.

Hence, the first computer program 40, and, thus, also the first computer-readable storage medium 38 may comprise instructions which, when executed by the first data processing unit 34 or, more generally, a first computer, cause the first data processing unit 34 or the first computer to carry out a method for determining a mileage of the vehicle 10.

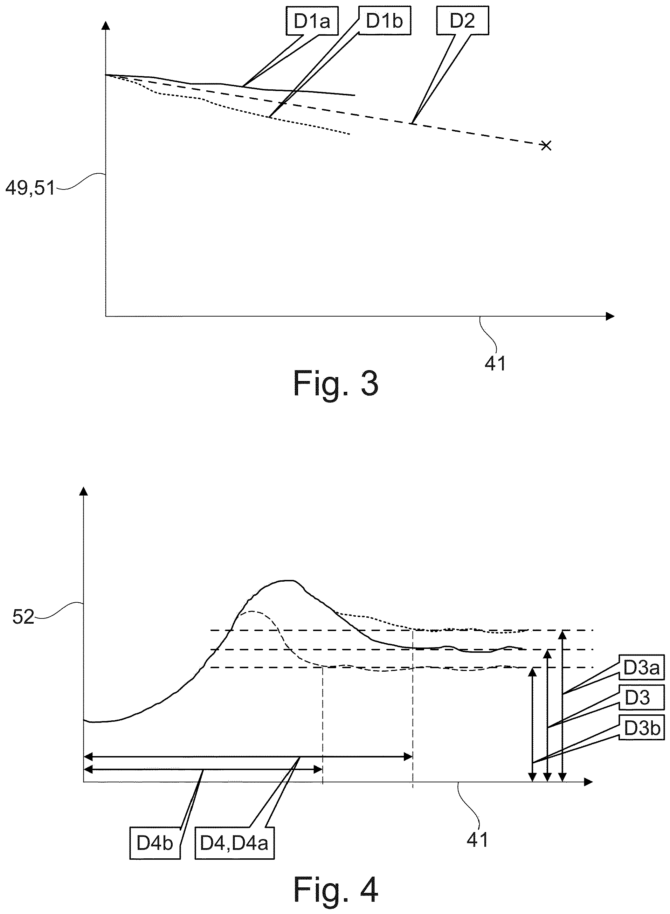

Figure 3 shows a diagram illustrating first data D1a, D1b indicative of a remaining usability 51 of the traction battery 18 over time 41.

Second data D2 indicative of the target remaining usability 49 of the traction battery 18 is indicated by a dashed line.

The target 49 remaining usability of the traction battery 18 decreases linearly from an origin of life of the traction battery 18 towards an end of life of the traction battery 18, which is marked by an "X".

Of course, other manners of a decrease such as an exponential decrease and/or a piecewise linear decrease are also conceivable.

At the end of life of the traction battery 18, the target usable electric capacity of the traction battery 18 is 80 % of a gross electric capacity of the traction battery in the present example.

Two alternative cases of first data D1a and D1b indicative of a remaining usability 51 of the traction battery 18 are drawn into the diagram of Figure 3.

First data D1a is indicative of a remaining usability 51 of the traction battery 18 that is higher than the target 49 remaining usability of the traction battery 18. This applies to the point in time at which the first data D1a is provided, i.e. at a point in time associated with the right end of the curve indicating the first data D1a.

Hence, a difference between the first data D1a and the second data D2 results in a positive value.

First data D1b is indicative of a remaining usability 51 of the traction battery 18 that is lower than the target 49 remaining usability of the traction battery 18. As before, this applies to the point in time at which the first data D1b is provided, i.e. at a point in time associated with the right end of the curve indicating the first data D1b.

Hence, a difference between the first data D1b and the second data D2 results in a negative value.

The method for controlling a traction battery 18 of a vehicle 10 further comprises a third step S3 of providing third data D3, D3a, D3b indicative of a target temperature 52 for the traction battery 18 based on a difference between the first data D1, D1a, D1b and the second data D2. According to examples, the third operation S3 may be performed by the second data processing apparatus.

Figure 4 shows the temperature 52 of the traction battery 18 during use as determined by the battery temperature sensor 24. The temperature 52 is shown over time 41.

Use of the traction battery 18 especially relates to charging the traction battery 18 or draining electricity from the traction battery 18 due to a driving activity of the vehicle 10.

A solid line in Figure 4 shows a course of the temperature 52 according to a first alternative.

After an initial increase of the temperature 52 of the traction battery 18, the traction battery 18 is cooled in order to reach a target temperature for the traction battery 18, which is indicated by D3.

A dotted line shows a second alternative.

It can be observed that, after the initial increase, which is identical to the one of the first alternative, the traction battery 18 is cooled so that it reaches a target temperature, D3a, that is higher than the target temperature of the first alternative as indicated by D3.

This results in a reduced cooling effort to cool the traction battery 18.

The reduced cooling effort associated with the second alternative saves energy compared to the cooling effort needed in the first alternative.

The reduced cooling effort is appropriate when the difference between the first data D1, D1a, D1b and the second data D2 is positive, as it is the case for first data D1a with respect to second data D2 in Figure 3.

A dashed line in the diagram of Figure 4 shows a third alternative.

It can be observed that, after the initial increase, which is identical to the one of the first alternative, the traction battery 18 is cooled so that it reaches a target temperature, D3b, that is lower than the target temperature of the first alternative as indicated by third data D3.

This is due to an increased cooling effort to cool the traction battery 18.

The increased cooling effort is appropriate if the difference between the first data D1, D1a, D1b and the second data D2 is negative, as it is the case for first data D1b with respect to second data D2 in Figure 3.

This is because, in the present example, increased cooling prevents the traction battery 18 from reaching high temperatures 52. This contributes to a reduced rate of ageing of the traction battery 18.

In the three alternatives of step S3, target temperatures for the traction battery 18 indicated by D3, D3a and D3b range between 25 °C and 65 °C.

As illustrated in Figure 3, the difference between the first data D1, D1a, D1b and the second data D2 may change over time 41.

Hence, also the target temperature 52 for the traction battery 18 may change over time 41.

Like the first data indicative of a remaining usability 51 of the traction battery 18 being based on a usage history of the traction battery 18, also a rate of change of the target temperature may be based on the usage history of the traction battery 18. The same alternatives and combinations of alternatives for describing the usage history of the traction battery 18 as explained above with respect to the first data D1, D1a, D1b also apply to the rate of change of the target temperature for the traction battery 18.

If the difference between the first data D1, D1a, D1b and the second data D2 changes over time 41, a rate of change of the target temperature 52 for the traction battery 18 may be set to be lower or equal to 5 °C per month.

A higher rate of change may be applied if the difference between the first data D1, D1a, D1b and the second data D2 is greater.

The method for controlling a traction battery 18 of a vehicle 10 further comprises an optional fourth step S4 of providing fourth data D4, D4a, D4b indicative of a time limit in which the target temperature for the traction battery 18 is to be reached based on the difference between the first data D1, D1a, D1b and the second data D2.

In Figure 4, a time period in which the temperature represented by the solid line or the dotted line reach their target temperatures 52 is indicated by D4, D4a.

Moreover, a time period in which the temperature represented by the dashed line reaches its target temperature is indicated by D4b.

The time period indicated by D4b is shorter than the time period indicated by D4, D4a.

The shorter time period is due to increased cooling effort to cool the traction battery 18.

Again, the increased cooling effort and a shorter time limit to reach the target temperature of the traction battery 18 is appropriate if the difference between the first data D1, D1a, D1b and the second data D2 is negative, as it is the case for first data D1b with respect to second data D2 in Figure 3.

This is because, in the present example, increased cooling causes the traction battery 18 to remain at high temperatures 52 for a shorter period of time 41. This contributes to a reduced rate of ageing of the traction battery 18.

The above examples were explained with respect to a cooling of the traction battery 18 of the vehicle 10.

Of course, if the vehicle 10 is used in a cold environment, the given examples may also be applied to cases in which the traction battery 18 of the vehicle is heated.

Similar to high temperatures, e.g. above 65 °C, over a long period of time, also low temperatures , e.g. below 25 °C, over a long period of time, contribute to a disproportionately accelerated ageing of the traction battery 18.

Hence, also an exposure of the traction battery 18 to comparatively low temperatures is to be avoided by the thermal control of the traction battery 18.

In summary, in all of the above-mentioned examples, first data D 1, D1a, D1b and second data D2 are used for providing third data D3, D3a, D3b and fourth data D4, D4a, D4b. In the above examples, the first data is based on a usage history of the traction battery.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: electric drivetrain
- 14: charging interface
- 16: converter unit
- 18: traction battery
- 20: electric machine
- 22: ampere meter
- 24: battery temperature sensor
- 26: voltmeter
- 28: ambient temperature sensor
- 30: first data processing apparatus
- 32: second data processing apparatus
- 34: first data processing unit
- 36: first data storage unit
- 38: first computer-readable storage medium
- 40: first computer program
- 41: time
- 42: second data processing unit
- 44: second data storage unit
- 46: second computer-readable storage medium
- 48: look-up table
- 49: target remaining usability of the traction battery
- 50: second computer program
- 51: remaining usability of the traction battery
- 52: temperature of the traction battery

- D1: first data indicative of a remaining usability of the traction battery
- D2: second data indicative of a target remaining usability of the traction battery
- D3: third data indicative of a target temperature for the traction battery
- D4: fourth data indicative of a time limit in which the target temperature for the traction battery is to be reached

## Claims

1. A method for controlling a traction battery (18) of a vehicle (10), the method comprising:
- obtaining first data (D 1, D1a, D1b) indicative of a remaining usability (51) of the traction battery (18),
- obtaining second data (D2) indicative of a target remaining usability (49) of the traction battery (18), and
- providing third data (D3, D3a, D3b) indicative of a target temperature (52) for the traction battery (18) based on a difference between the first data (D1, D1a, D1b) and the second data (D2).

2. The method of claim 1, wherein the first data (D1, D1a, D1b) is based on a usage history of the traction battery (18).

3. The method according to claim 2, wherein the usage history of the traction battery (18) is described by at least one of:
- an average temperature of an ambient of the traction battery (18) over a time (41) period,
- an average temperature (52) of the traction battery (18) during parking,
- an average temperature (52) of the traction battery (18) during charging,
- an average temperature (52) of the traction battery (18) during driving of the vehicle (10),
- an amount of time (41) the temperature (52) of the traction battery (18) was above a predefined temperature (52) threshold,
- a number of times the temperature (52) of the traction battery (18) was above a predefined temperature (52) threshold,
- an amount of time (41) a state of charge of the traction battery (18) was above a predefined charging threshold,
- a number of times a state of charge of the traction battery (18) was above a predefined charging threshold,
- an amount of time (41) a current delivered into or drained from the traction battery (18) was above a predefined current threshold, and
- a number of times a current delivered into or drained from the traction battery (18) was above a predefined current threshold.

4. The method of any one of the preceding claims, wherein the remaining usability (51) is associated with a remaining usable electric capacity of the traction battery (18) and/or wherein the target remaining usability (49) is associated with a target remaining usable electric capacity of the traction battery (18).

5. The method according to claim 4, wherein the target usable electric capacity of the traction battery (18) exceeds 70 % of a gross electric capacity of the traction battery (18), preferably 75 % and even more preferably 80 % of a gross electric capacity of the traction battery (18).

6. The method according to any of the preceding claims, wherein the target temperature (52) for the traction battery (18) is 25°C to 65°C.

7. The method according to any of the preceding claims, wherein an allowable rate of change of the target temperature (52) for the traction battery (18) is based on the usage history of the traction battery (18).

8. The method according to claim 7, wherein the allowable rate of change of the target temperature (52) for the traction battery (18) is lower or equal to 5 °C per month, preferably lower or equal to 3 °C per month and even more preferably lower or equal to 1 °C per month.

9. The method according to any of the preceding claims, wherein the method further comprises:
providing fourth data (D4, D4a, D4b) indicative of a time limit in which the target temperature (52) for the traction battery (18) is to be reached based on the difference between the first data (D1, D1a, D1b) and the second data (D2).

10. The method according to claim 9, wherein the time (41) limit is 1 hour or less, preferably 45 minutes or less, even more preferably 30 minutes or less.

11. A use of first data (D 1, D1 a, D1b) indicative of a remaining usability (51) of a traction battery (18) and/or second data (D2) indicative of a target remaining usability (49) of a traction battery (18) for providing third data (D3, D3a, D3b) indicative of a target (49) temperature (52) for the traction battery (18).

12. A use of first data (D1, D1a, D1b) indicative of a remaining usability (51) of a traction battery (18) and/or second data (D2) indicative of a target remaining usability (49) of a traction battery (18) for providing fourth data (D4, D4a, D4b) indicative of a time (41) limit in which a target temperature for the traction battery (18) is to be reached.

13. The use of claim 11 or 12, wherein the first data (D1, D1a, D1b) is based on a usage history of the traction battery (18).

14. A data processing apparatus (32) comprising means for carrying out the method of any one of claims 1 to 10.

## Amended claims

### Amended claims in accordance with Rule 137(2) EPC.

1. A method for controlling a traction battery (18) of a vehicle (10), the method comprising:
- obtaining first data (D1, D1a, D1b) indicative of a remaining usability (51) of the traction battery (18), wherein the remaining usability (51) is associated with a remaining usable electric capacity of the traction battery (18),
- obtaining second data (D2) indicative of a target remaining usability (49) of the traction battery (18), wherein the target remaining usability (49) is associated with a target remaining usable electric capacity of the traction battery (18), and
- providing third data (D3, D3a, D3b) indicative of a target temperature (52) for the traction battery (18) based on a difference between the first data (D1, D1a, D1b) and the second data (D2), wherein the target temperature (52) is a reference temperature for a thermal management system of the traction battery (18),
**characterized in that** an allowable rate of change of the target temperature (52) for the traction battery (18) is based on a usage history of the traction battery (18).

2. The method of claim 1, wherein the first data (D1, D1a, D1b) is based on the usage history of the traction battery (18).

3. The method according to claim 1 or 2, wherein the usage history of the traction battery (18) is described by at least one of:
- an average temperature of an ambient of the traction battery (18) over a time (41) period,
- an average temperature (52) of the traction battery (18) during parking,
- an average temperature (52) of the traction battery (18) during charging,
- an average temperature (52) of the traction battery (18) during driving of the vehicle (10),
- an amount of time (41) the temperature (52) of the traction battery (18) was above a predefined temperature (52) threshold,
- a number of times the temperature (52) of the traction battery (18) was above a predefined temperature (52) threshold,
- an amount of time (41) a state of charge of the traction battery (18) was above a predefined charging threshold,
- a number of times a state of charge of the traction battery (18) was above a predefined charging threshold,
- an amount of time (41) a current delivered into or drained from the traction battery (18) was above a predefined current threshold, and
- a number of times a current delivered into or drained from the traction battery (18) was above a predefined current threshold.

4. The method according to any of the preceding claims, wherein the target usable electric capacity of the traction battery (18) exceeds 70 % of a gross electric capacity of the traction battery (18), preferably 75 % and even more preferably 80 % of a gross electric capacity of the traction battery (18).

5. The method according to any of the preceding claims, wherein the target temperature (52) for the traction battery (18) is 25°C to 65°C.

6. The method according to any of the preceding claims, wherein the allowable rate of change of the target temperature (52) for the traction battery (18) is lower or equal to 5 °C per month, preferably lower or equal to 3 °C per month and even more preferably lower or equal to 1 °C per month.

7. The method according to any of the preceding claims, wherein the method further comprises:
providing fourth data (D4, D4a, D4b) indicative of a time limit in which the target temperature (52) for the traction battery (18) is to be reached based on the difference between the first data (D1, D1a, D1b) and the second data (D2).

8. The method according to claim 7, wherein the time (41) limit is 1 hour or less, preferably 45 minutes or less, even more preferably 30 minutes or less.

9. A use of first data (D1, D1a, D1b) indicative of a remaining usability (51) of a traction battery (18) and/or second data (D2) indicative of a target remaining usability (49) of a traction battery (18) for providing fourth data (D4, D4a, D4b) indicative of a time (41) limit in which a target temperature for the traction battery (18) is to be reached, wherein the remaining usability (51) is associated with a remaining usable electric capacity of the traction battery (18) and wherein the target remaining usability (49) is associated with a target remaining usable electric capacity of the traction battery (18).

10. The use of claim 9, wherein the first data (D1, D1a, D1b) is based on a usage history of the traction battery (18).

11. A data processing apparatus (32) comprising means for carrying out the method of any one of claims 1 to 8.
